# EUROPEAN PATENT SPECIFICATION

(11) **EP 1 207 738 B1**
(45) Date of publication and mention of the grant of the patent: **02.07.2003**
(21) Application number: 00951859.8
(22) Date of filing: 31.07.2000
(51) Int. Cl.: A01D 46/26

(54) **MULTI-TOOL MECHANICAL HARVESTING DEVICE**
MECHANISCHE ERNTEMASCHINE MIT MEHREREN WERKZEUGEN
APPAREIL DE RECOLTE MECANIQUE A OUTILS MULTIPLES

(30) Priority: 02.08.1999 IT PE990017
(43) Date of publication of application: 29.05.2002
(73) Proprietor: Di Marco, Emidio, 65010 Montebello di Bertona (IT)
(72) Inventor: Di Marco, Emidio, 65010 Montebello di Bertona (IT)
(74) Representative: Kuborn, Jacques
(86) International application number: IT0000323
(87) International publication number: WO01008466

(56) References cited:
- CH-A- 452 981
- DE-A- 3 507 545
- ES-A- 2 076 119
- IT-B- 1 162 158
- IT-B- 1 219 674

## Description

The following is a description of a new interchangeable multi-tool device for the harvest of Olives and Coffee drupes from the respective plants.

A number of systems meant to make olives fall from the trees have already been devised, such as Vibration, Shaking and Tearing devices. All of these, however, have not been able to ease the task of operators, who have not been satisfied with the results of their harvest. In particular, they have not been able to pick the Olives easily among the branches, especially the smallest Olives, which are also the most difficult to tear from the tree, like Canino and Carboncella Olives or a number of other varieties of the same size or even smaller, following from draught, slow growth, etc. Indeed, it is frequent to get a certain amount of smaller fruit even if the Olive size is larger than that of the above-mentioned varieties.

Moreover, any marks, bruises or cuts caused during the harvest of Olives could lead to the fermentation of the fruit and, as a consequence, to a higher degree of acidity, if Olives are used for oil-making, and to a series of other problems, if Olives are stored.

Branches, especially the thickest ones, could also be easily scratched and even broken during the harvest, thereby increasing the risk for the trees to be affected by olive knot, beside reducing their yielding capacity.

A device for the harvest of olives is known, for example, from document ES 2076119, which among the other things, is the preamble of claim 1. However, such device is not capable of solving the above problems and disadvantages since the waved tools used in it are associated to a body and to control members through springs. Such springs protrude from the body and form grips that may get caught in the branches and scratch them, tearing the leaves away and damage the fruits. In such device, it has been proved that the tools essentially serve as shakers, since they are not capable of removing the fruit from the branch through " tearing", which on the other hand is the correct harvesting action.

This is why most operators still prefer to harvest olives by means of traditional rakes, in a way that, apart from being cumbersome, is neither safe nor productive.

As to coffee drupes, there is still no mechanical tool able to tear the drupes directly from the plant according to their size and without damaging the plants, branches and leaves, the latter being bigger than those of olive trees.

The aim of the invention herein described is instead to provide an extremely simple and economical. device that is also easy to use, efficient and able to pass through and along the branches, brushing in all positions and towards all directions, even with thick foliage. This mechanical device makes it possible to tear the Olives from the branches by means of tools adequate to the harvest, called harvesting tools, which are interchangeable and have different thickness diameter according to fruit size and variety. To this purpose, the present invention relates to a multi-tool device for the harvest of olives and coffee drupes conforming with the characterising part of claim 1. The other claims 2-15 refer to particular constructive aspects of the same device.

The above document ES 2076119 does not describe or discloses that:
- the first wave, the lower one of each tool, is protected into the aperture of the body the tool rotates in,
- the presence of some body spacing guards can form a barrier around the first wave of all harvesting tools,
- each harvesting tool is provided with a half-open point, which is tilted with respect to the tool axis,
- each tool consists of more small rods connected to one another with constant or variable waving in length,
- the transmission units can rotate by a unidirectional or alternate motion on at least an angle of 180°.

In the device of the present invention, the outer upper base of the Tool Holder Shell (holding the harvesting tools) forms a Barrier that is constantly adjacent, almost adherent, to the lower end of the first curve on the side of the tool shank. This part of the outer upper base of the tool holder shell is aimed exclusively at pushing back bigger branches, so that the device allows the operator to make an immediate second attempt at tearing the remaining olives from the above-mentioned smaller branches, while at the same time making it possible to reach the smallest varieties of Olives, even when their size is below standard.

Last but not least, such device will neither break and entangle the branches nor damage the plants whatsoever.

An electronic engine control device is connected to the engine power supply wire and, by means of connecting terminals, to a battery. This electronic control device can be adjusted to the desired working stress of the engine and can be set to stop the engine when the working stress exceeds the limit previously establishod. This device is aimed at stopping the harvesting tools, especially at small inner branches with no Olives, which are much thicker than those bearing fruit. Once the tool is idling, it will be much easier to extract it from the branches.

After re-adjusting the device to a normal working stress, the engine will restart automatically.

The invention is also meant to provide an extremely simple and economical device that is also easy to use, efficient and able to pass through and along the branches, brushing in all positions and towards all directions, even with the kind of foliage that is less tear-resistant. Document DE 35 07 545 describes a device having a head carrying more tools, and that exhibits so-called side "guards". However, in such embodiment, the tools do not rotate individually; the head fully oscillates on an axis and the guards are at the sides of the head, rather than at the side of the tools in the strict sense of the word.

On the contrary, the improved device of the invention exhibits two small overhanging spacing guards along the two sides of the outer upper base of the tool holder shell. Thanks to these guards the harvesting tool is more flexible, because it works at a higher position, i.e. towards the upper open part opposite to the tool shank. The guards thus prevent the branches or fruit from getting too close to the outer upper base of the tool holder shell, which works as a barrier constantly adjacent, almost adherent, to the first curve lower end of the harvesting tool on the side of the tool shank to which it is rigidly fixed; the two small overhanging spacing guards ensure flexibility to the harvesting tool thereby diminishing the tightening pressure on the branches through the harvesting tools, always functioning as a barrier constantly adjacent, almost adherent, to the first curve lower end of the harvesting tool or to any other part of the tool starting from the tool shank; as a result, while keeping its effectiveness, the mechanical tearing performed by these tools is milder, especially on weaker, more fragile branches that can easily break, and on the fruit itself. This system is perfect for the harvesting of very tender olives to be eaten or preserved, because it avoids any marks, bruises, or cuts in the fruit and any scratches in the blanches, the same applying to coffee plants characterised by an even larger foliage. In this case, harvesting tools with different thickness diameters can be replaced one with the other, thus increasing or reducing the gap between two or more tools, along which the fruit fall, according to the size of the fruit itself. In the case of coffee drupes, for example, this enables the operator to select the fruit according to its size. Such process is carried out by means of a device for the harvest of olives and coffee drupes, made up of an upper cover and a lower cover forming a tool holder shell containing at least a series of transmission units operating at least a row of harvesting tools, whose lower end first curves on the side of the tool shank are constantly adjacent, almost adherent, to the outer upper base of the tool holder shell. These harvesting tools are connected and coupled from the outside to the outer upper base of the tool holder shell and fixed on the side of the outer lower base of the shell. They pass through the perforated hubs and the central extended perforated drive hub, which, together with gears and bearings, constitute the transmission units. An engine case is connected to the front of the outer lower base of the shell. A handgrip extends from at least one side of this case. This handgrip is used to manoeuvre the device and can be inserted inside a rod functioning in turn as a handle operating the device. The engine controlling the transmission units can be installed either inside the engine case, which in turn is placed in the tool holder shell, or remotely placed to control the transmission units by means of a flexible drive belt, a hydraulic pipe, or a power supply cable.

This device also consists of two small overhanging guards, which are steadily and interchangeably placed on the outer upper part of the tool holder shell, of a small movable cable for rapid connection, and of an electronic engine control device.

Further details on the invention are provided in the following description concerning the attached drawings.

Fig. 1 shows a view of the multi-tool mechanical tearing device in running mode with all its parts.

Fig. 2 is a view similar to Fig. 1, this time seen from behind, to show the device handgrip and the connection to the engine case.

Fig. 3 is a view similar to Fig. 1 and 2 this time showing the necessary couplings and the points of insertion of the harvesting tools from above. The harvesting tools are constantly adjacent, almost adherent to the first curve lower end on the side of the tool shank on the outer upper base of the tool holder shell. Another clearly visible detail is the presence of countersinks next to each insertion hole of the harvesting tools and to the outer lubrication system of the mechanical parts.

Fig. 4 is a detailed plan view of the engine case as in Fig. 1, showing the opening where the engine can be inserted, through the corresponding blocking holes of the case, to the outer lower base of the shell, thereby allowing coupling of the two units.

Fig. 5 shows a detailed view of the whole of a movable small cable for rapid connection with terminals to be connected to a battery.

Fig. 6 shows an external view of the electronic engine control device.

Fig. 7 shows a detailed view of the inner part of the upper cover and the lower cover with the cavities for the transmission units as well as the insertion holes for the harvesting tools into the upper cover and the exit holes of the perforated hubs in the lower cover. Fig. 7 also shows a view of the transmission units consisting of perforated hubs fixed by means of gears and bearings aligned in their seat, where they must be inserted to enable functioning of the harvesting tools.

Fig. 8 shows a detailed section of the tool holder shell already coupled, where the correct position of the transmission units inside the tool holder shell is displayed. Fig. 8 also shows the way each harvesting tool is fixed from the outer lower part of the tool holder shell, and a detailed view of the harvesting tool shank.

Fig. 9 shows one possible layout of the harvesting tools.

Fig. 10 shows one possible layout of the upper open end of the harvesting tools, with semi-open end, i.e. with extended point.

Fig. 11 shows a perspective view of the device and one small overhanging spacing guard installed in a movable, changeable position along the outer upper base of the tool holder shell of the same device in running mode.

Fig. 12 shows a section view of the right or left side of the small overhanging spacing guards installed on the outer upper base of the tool holder shell of the harvesting tool.

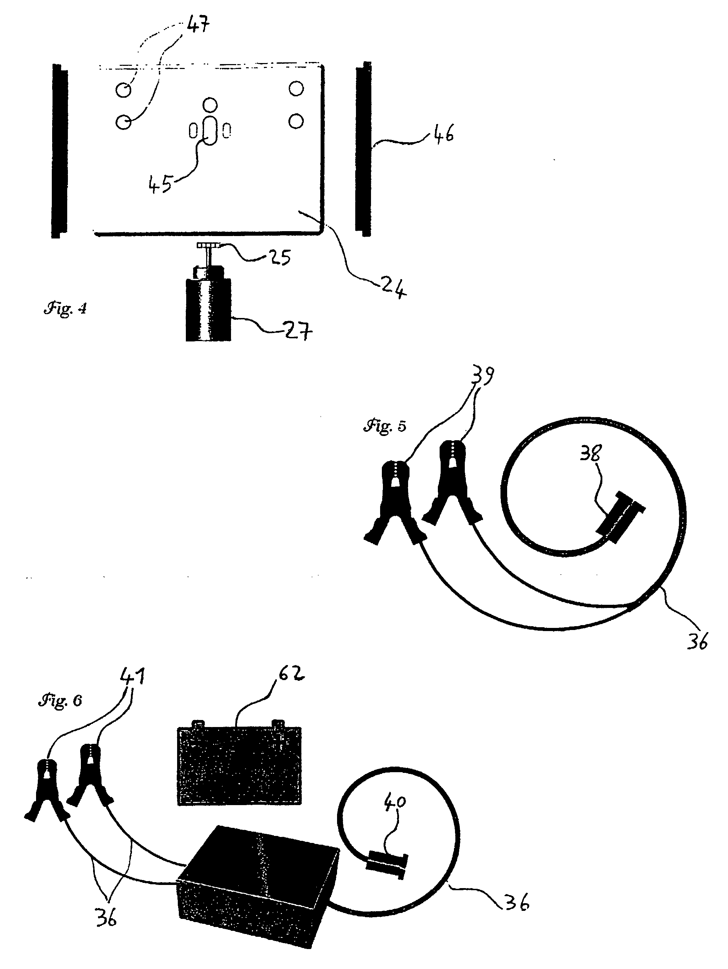

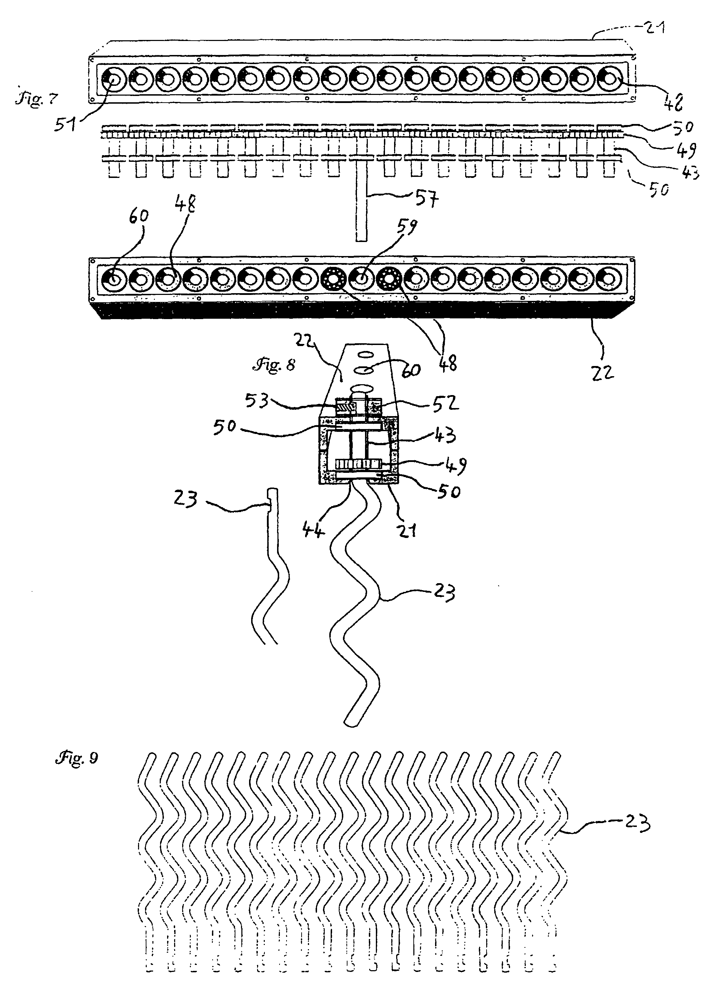

The device for the harvest of olives and coffee drupes is composed by a tool holder shell 20, including an upper cover 21 and a lower cover 22, a series of harvesting tools 23, an engine case 24, a supporting tube 29, a hand grip 28, a funnel 30, a spacer 31, a grip rod 35, a tube lock ring 34, an engine 27, a side slot wire conduit 55, a wire 36, a plug terminal 32, a socket terminal 33, a plug terminal 37, a small movable cable for rapid connection Fig. 5, an electronic engine control device Fig. 6, two small overhanging spacing guards 54.

The tool holder shell 20 can have any size and shape provided that the outer upper base of the tool holder shell 20-21 Fig. 3 remains smooth and flat with respect to the harvesting tools 23 and that has (preferably) countersinks 44, which also enable a further embedding of the first curve lower end of the harvesting tool 23 on the side of the tool shank 23 Fig. 8, thus making it more adjacent to the outer upper base of the tool holder shell 20-21; in this case, the shell is mainly used to create a constantly adjacent, almost adherent, Barrier with the harvesting tools 23.

The tool holder shell 20 is made of light and resistant material, namely a light alloy such as aluminium, titanium, magnesium, etc. It is made up of two complementary covers, defined as upper cover 21 and lower cover 22, one on top of the other functioning as a hermetic case for a series of transmission units consisting of gears 49 Fig. 7-8, with perforated hubs 43 installed on their axes, and a central extended perforated drive hub 57, which is inserted on the axes of the upper and lower bearings 50 supporting it from the inside of the tool holder shell 20.

These transmission units 49, 43, 57, and 50 are located in the seats 48 created inside the upper cover 21 and the lower cover 22 Fig. 7-8, which in turn are interconnected one after the other, whereas the gears 43 are placed one against the other so as to allow a synchronised rotation around their own axes, inside the tool holder shell 20.

The central extended perforated drive hub 57 comes out at the centre of the outer lower base of the tool holder shell 20-22, more specifically from the central exit hole 59 Fig. 7. The central extended perforated drive hub can perform a clockwise or an anti-clockwise rotation around its axis, functions as a drive shaft and operates all interconnected transmission units 49-43-50 placed on both its left and right sides inside the tool holder shell 20, thus giving to the transmission units 49-43-50, and consequently to the connected harvesting tools 23, a rotating direction around their axes, which face one another. This rotation system around the axes is such that the harvesting tools 23 carry out two operations, thereby making it easier to brush the branches. Indeed, since the harvesting tools rotate one facing the other, the device does not pass through the branches by itself started by the rotation movement, but must be either pulled or pushed by the operator.

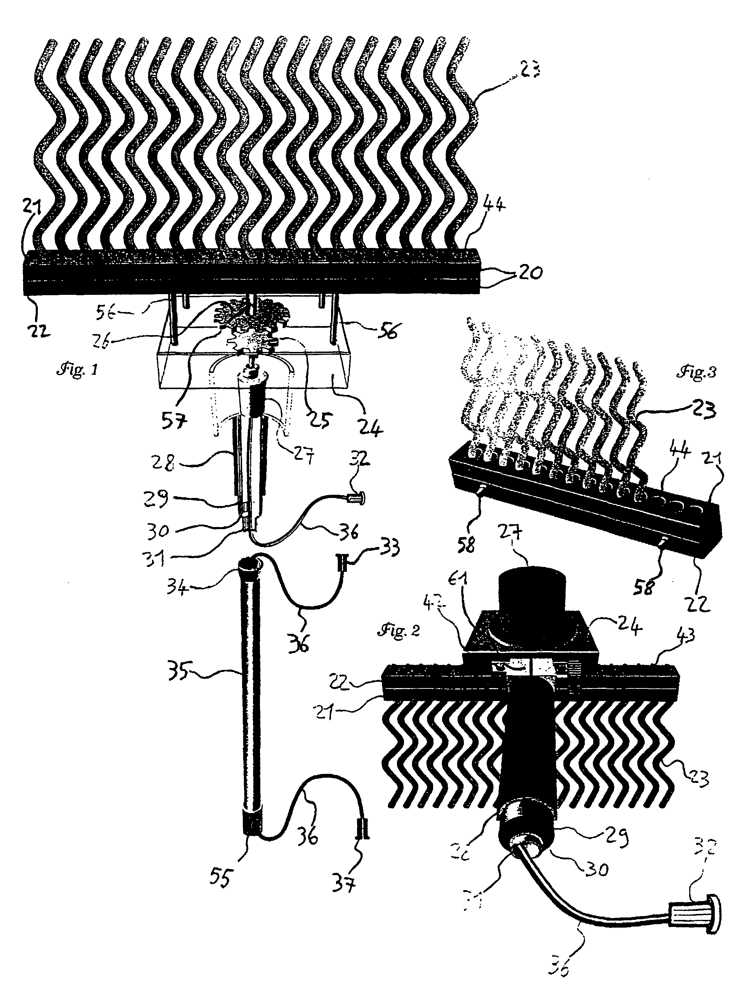

The central extended perforated drive hub 57 is part of the transmission units 49-43-50: a pinion 26 is connected to the hub end located outside the outer lower base of the tool holder shell 20-22. The pinion 26 functions as revolution exchanger unit and is connected to the sprocket 25 of the engine 27 Fig. 1, which starts it, also, if necessary, through remote control by means of a drive belt.

The transmission units 49-43-50 started by the central extended perforated drive hub 57, apart from rotating around their axes, which face one another, can also perform an alternated semi-rotation around their axes, which face one another. The semi-rotation provides to the transmission units 49-43-50, including the central extended perforated drive hub 57 as well as the harvesting tools 23, a system rotating clockwise around their axes for 50% of the full rotation and anti-clockwise for the remaining 50% of the full rotation in an alternated movement (alternated semi-rotation), thus making it also possible to use the device on plants with large foliage without removing it.

These percentages of both clockwise and anti-clockwise rotation can be reduced or increased, depending on the needs: this can be done through adequate revolution exchangers installed on the engine case 24 or directly through the engine 27 Fig.1.

The tool shank 23 Fig. 8 of each harvesting tool 23 is inserted from the holes 51, on the side of the outer upper base of the tool holder shell 20-21 Fig. 1-3-7, in any case through and on the respective axes of the perforated hubs 43 and of the central extended perforated drive hub 57; each tool shank 23 Fig. 8 perfectly matches the size of the inner opening of the perforated hubs 43 and of the central extended perforated drive hub 57, which go respectively from the holes 60 and the central hole 59 of the lower base of the shell 20-22, to or beyond the open end of the perforated hubs 43. The shank is fixed from the outside of the lower base of the tool holder shell 20-22, in a movable, changeable position, by means of a screw 53 fixing counter-bush 52 Fig. 8 on the perforated hubs 43 and on the central extended perforated drive hub 57.

The harvesting tools 23 can rotate one opposite to the other or can have an alternate semi-rotation in the running mode.

Each harvesting tool 23 Fig. 12 is made up of one small tooth, with round or oval section, which is either rigid or flexible, wavy, helicoid or spiral-shaped, where the curves are more or less wide but all symmetric to each other and to the tooth axis. The harvesting tools (23) have then either the same or different shape and/or length and/or thickness diameter and/or function.

The harvesting tools 23 with round or oval section may have solid or hollow section, each one consisting of a single element or of more joint elements. These teeth are made of titanium, elastic mild steel or other metals, plastic material, fibreglass, etc.

The harvesting tools 23 with round or oval section have a tool shank 23 Fig. 8 at their lower end, which is completely or partially levelled off on one side, thus improving fixing of the harvesting tools 23 Fig. 8.

They can now translate upwards or downwards inside the perforated hubs 43 and the central extended perforated drive hub 57 before being fixed by means of a screw (53) fixing counter-bush 52 Fig. 8, so as to allow the first curve of the harvesting tool 23 lower end on the side of the tool shank 23 to be more or less adjacent to the outer upper base of the shell 20-21. By either increasing or decreasing the harvesting tool 23 adjacency, before locking it by means of a screw (53) fixing counter-bush 52 Fig. 8, the device can be tailored, i.e. the gap between the tools can be adjusted to match the size of the fruit.

The upper end of the harvesting tools 23 Fig. 9 is open.

The tool shanks 23 are inserted in, coupled and fixed on the axes of the perforated hubs 43 and the central extended perforated drive hubs 57, rotating, or performing an alternated semi-rotation around their own axes, which face one another.

The coupling of the harvesting tools 23 with the perforated hubs 43 and the central extended perforated drive hub 57 is rigid and results into a whole block.

Fig. 9 shows one possible layout of the harvesting tools 23 made up of teeth with round or oval section, designed to make the tools pass through all branches easily during rotation. The curves of the wavy-shaped teeth of each harvesting tool 23 are all symmetric to each other and to the axis of each tool 23. In addition, the curves of each harvesting tool (23) can be more or less wide depending on the inter-axes of the transmission units 49-43-50-57 bearing them, so as to prevent the tools from touching each other during rotation or alternate semi-rotation around their own axes.

Non only does the distance between the harvesting tools, i.e. the gap between two or more tools to be adjusted to match the size of the fruit, depend on the given dimension of the inter-axes, but also on the thickness diameter of the harvesting tool 23 itself. As a result the device can be tailored by replacing the harvesting tool 23 with another tool of different thickness diameter, depending on the size of the fruit, thus performing mechanical tearing.

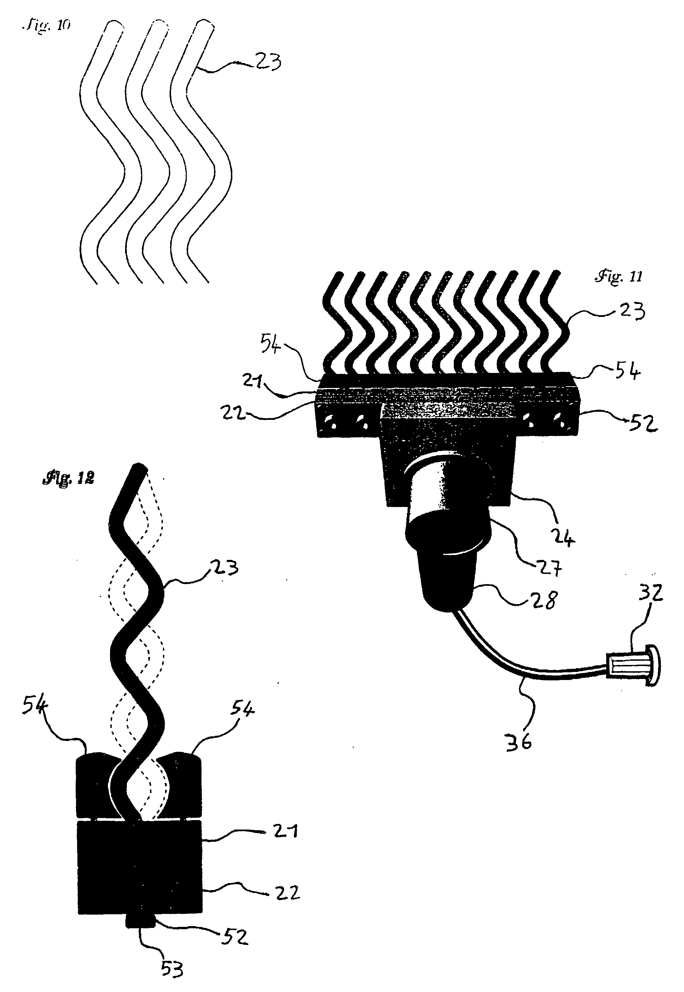

Fig. 10 shows the upper open end of the harvesting tool 23, which is wavy-shaped and where all curves are symmetric to each other and to the axis of the tool itself 23 and have a semi-open point, with the characteristic width of the last curve facing the upper open end: this curve of the teeth is as wide as the other curves and has, at the open end of the same tool 23, an extended point. This last feature makes it easier for the tool 23, regardless of its thickness diameter, to move through the branches, without forcing the tools 23 and the device through the branches.

The tool holder shell 20 can contain one or more rows of harvesting tools 23 all parallel to each other, whereby the tools of one row can be alternately placed to form a quincunx with the tools of the other rows.

Every single row can be controlled through a different transmission system 49-43-50-57.

The upper part of the supporting tube 29 under the hand grip 28 can be steadily connected to the lower part of the engine case 24 by means of a screw-fixed plate 42 Fig. 2, with pre-set and unchangeable angle between the tube 29 and the engine case 24.

In order to adjust the device to the direction established, the upper part of the supporting tube 29, placed under the hand grip 28, is applied to the lower part of the engine case 24 by means of a multi-position locking joint coupling 61 Fig. 2. This system enables the operator to set and change as desired the position of the engine case 24, of the tool holder shell 20, and, consequently, of the harvesting tools 23 in relation to the supporting tube 29 bearing the hand grip 28 Fig. 1-2.

According to the construction designs the lower open end of the supporting tube 29 bearing the hand grip 28 can be installed on a grip rod 35; the installation can be helped by means of a funnel 30 and a spacer 31, which are made of smooth plastic material for an easier insertion of the supporting tube 29 into the tube lock ring 34 placed at the upper end of the grip rod 35. This system is designed to get, after installation and tightening of the tube lock ring 34 at the upper end of the grip rod 35, a connection of the supporting tube 29 and the grip rod 35, joint together to form a single rigid unit, the rigidity being the result of the insertion of the spacer 31 inside the grip rod 35, which prevents the device from swinging.

The grip rod 35 can be made up of a single tube or a number of tubes inserted one inside the other. This enables the operator to reach the highest branches.

A side slot wire conduit 55 is fixed to the lower end of the grip rod 35, thus facilitating the sliding of the wire 36 Fig.1 along the grip rod 35 and protecting the wire from being crashed or damaged. Indeed the wire will not touch the ground every time the device fixed on the grip rod 35 is perpendicular to the ground and it will be easier to extend the grip rod, even when the rod is perpendicular to the ground.

In order to case installation and replacement of the grip rod 35 Fig. 1 with the supporting tube 29, a wire 36 can be inserted starting from the engine 27, supported by the engine case 24, passing through the supporting tube 29, the funnel 30 and the spacer 31. This wire 36 ends with a plug terminal 32, which is connected to the socket terminal 33 of the wire 36 passing through the hand grip 35.

The wire 36 coming out of the side slot wire conduit 55 on the lower end of the grip rod 35 has a plug terminal 37, which in turn can be connected to the corresponding socket terminals 38 of the small movable cable for rapid connection as in Fig. 5, or to #40 of the electronic engine control device in Fig. 6. The terminals 39 in Fig. 5 or 41 in Fig. 6 are the connected to the DC power supply 62 in Fig. 6, which is recommended for safety reasons.

This DC power supply can also be carried by means of an adequate rucksack.

The DC engine 27 is supported by an engine case 24 Fig. 1-4 closed by two anti-noise side plugs, and is fixed from the front to the fixing hole 45 Fig. 4 so as to form a single unit, made up of the engine itself 27 and the engine case 24, which in turn can be coupled from the front to the outer lower base of the tool holder shell 20-22 through the fixing holes 47.

While coupling the two units, i.e. the engine case 24 and the outer upper base of the tool holder shell, it is advisable to apply the spacers 56 in Fig. 1, which create a gap between the two units, thereby facilitating changing of the tools 23 from the fixing point where the screw fixing counter bushes 52 and 53 are.

The spacers 56 are made of light resistant material, such as aluminium, titanium, etc. or of anti-vibration rubber materials.

Fig. 5 shows a pre-set small movable cable for rapid connection, designed to be connected to a battery and to be easily adjustable regardless of the location of the batteries (in tractors, other vehicles, etc).

The DC engine 27 or any other engine controlling the device must be adjusted to the necessary working stress.

It is possible with a DC engine 27 to adjust the electronic engine control device Fig. 6 to the desired working stress of the DC engine 27 controlling the transmission units 49-43-50-57 and consequently the harvesting tools 23 working through the branches.

The control device in Fig. 6 stops the engine 27 when the working stress of the latter exceeds that previously established by means of the control device itself Fig. 6. By taking the transmission units 49-43-50-57 and the tools 23 back into neutral, the control device in Fig. 6 makes it possible to extract, even disentangle, the tools from thick branches bearing no fruit and to restart the engine 27 once normal working stress has been restored.

The engine can be a DC hydraulic, internal combustion, or pneumatic engine, which is designed to start the transmission units 49-43-50 and the harvesting tools 23 on the tool holder shell 20 by means of a central extended perforated drive hub 57 with pinion 26.

The engine can be either remotely placed or installed in the engine case 24. In the latter case it must be connected to DC hydraulic, internal combustion, or pneumatic power supplies by means of either a flexible drive belt or hydraulic or air pipes extending inside the supporting tube 29, the funnel 30, the spacer 31, the grip rod 35, and being part of the same system of the DC engine power supply wire 36 Fig. 1.

Two small overhanging spacing guards 54 Fig. 11-12, made of smooth plastic or metal material, can be placed, in either rigid or movable and interchangeable position, on the outer upper base of the tool holder shell 20-21, in order to make the branches rub against them while the device is working, thus preventing the branches themselves from hindering the harvest.

The two guards are placed along the two sides of the outer upper base of the tool holder shell 20-21 and their upper part, facing the open end of the harvesting tools 23, is smooth and flat with bevelled or rounded corners, so as to avoid any cuts or damage caused to the plants when the device is working.

The small overhanging spacing guards 54, raised on the outer upper base of the tool holder shell 20-21, are designed to push back and pulling towards the tools 23 the branches. They also make the tools 23 more flexible because they shift the working part of the tool 23 from the 0 bending stress point, i.e. where the insertion point at the outer upper base of the tool holder shell 20-21, towards the upper open end of the tool. The guards 54 create a barrier that is adjacent, almost adherent, to the lower end of the harvesting tool second curve, starting from the shank side or from any other point of the tool 23, as deemed necessary.

The small overhanging spacing guards can have either solid or hollow section and have same or different shape and/or length and/or thickness diameter and/or width and/or height.

The guards can be made up of one single unit to be placed in a movable and interchangeable way along the outer upper base of the tool holder shell 20-21. This system is perfect for the harvesting of very tender olives to be eaten or preserved as well as the harvesting of coffee drupes, coffee plants having larger leaves. Indeed this system avoids any marks, bruises, or cuts in the fruit and any scratches in the branches of fragile plants.

The device is used by positioning the tools 23 among the branches, passing through and along them, gently brushing, and moving the device along the branches as desired, to the bottom, to the top, sideways, etc.

The harvesting tools 23, placed among the branches to touch them, rotate or perform an alternate semi-rotation one against the other, and let the olives or coffee drupes drop by means of mechanical tearing. These tools tear the fruit regardless of their variety and size, including below-standard fruit. There is also the possibility of tailoring the device by changing the harvesting tools 23 in the tool holder shell 20, i.e. tools 23 with different thickness diameter can also be fixed alternately according to the size and variety of the fruit. Before installing these tools 23, it is necessary to establish the adjacency of the lower end of the tool 23 first curve on the shank side to the outer upper base of the tool holder shell 20-21.

It is also possible to install two small overhanging spacing guards 54 on the outer upper base of the tool holder shell 20-21, depending on the type of plant, even if the latter is very tender and has leaves that are similar to those of coffee.

## Claims

1. Multi-tool device for the harvest of olives and coffee drupes from the respective plants, comprising a body (20) enclosing at least one series of transmission units (43, 49, 50, 57), at least one row of harvesting tools (23) coupled and actuated with said transmission units and emerging from a side of said body through circular apertures, said harvesting tools being waved starting from a first wave at the body up to a free end, a case (24) connected to an opposed side of said body and containing a speed reduction unit, coupling means (61) for fastening a rod (35) for gripping and operating the device, a motor (27) for controlling said transmission units to actuate the harvesting tools through a central traction shaft (57), **characterised in that** the side of the body (20) from which the harvesting tools (23) emerge is flat and **in that** the first wave of each harvesting tool is strictly adjacent said side of said body, at least partly and turnable contained into a respective circular aperture.

2. Multi-tool device according to claim 1, wherein said body consists of two superimposed complementary shells (21, 22) and said circular apertures are provided in the side of a shell of said body from which the harvesting tools emerge.

3. Multi-tool device according to claim 1, wherein said body (20) consists of two superimposed complementary shells (21, 22) and on the flat side of the shell of the body from which the harvesting tools emerge there are removably applied spacing guards (54) running from opposed sides of the harvesting tools and forming a barrier at the level of at least one part of the first wave of each harvesting tool.

4. Multi-tool device according to claim 3, wherein the spacing guards (54) have a flat or hollow section of a metal or plastic material, and their surface facing the free end of the shaking tools is flat with chamfered or rounded corners.

5. Multi-tool device according to claims 3 and 4, wherein said spacing guards (54) have same or different height on the opposed sides of the harvesting tools and can consist of a single body.

6. Multi-tool device according to the previous claims, wherein each harvesting tool ends at its free end with a half-open point that is tilted with respect to the general longitudinal axis of the device.

7. Multi-tool device according to the previous claims, wherein the harvesting tools (23) are actuated by the motor through said transmission units to rotate unidirectionally.

8. Mufti-tool device according to claims 1 and 2, wherein the harvesting tools (23) are actuated by the motor through the transmission units to rotate with an alternate. rotatory motion by at least an angle of 180°.

9. Multi-tool device according to claims 1 and 2, wherein each harvesting tool (23) consists of at least one small stiff or flexible rod, of a metal or plastic material, having round or elliptic section, flat or hollow.

10. Multi-tool device according to claim 5, wherein each harvesting tool (23) consists of more consecutive rods joined to one another.

11. Multi-tool device according to any one of the previous claims, wherein said transmission units are aligned on at least one row of said body, and each of said harvesting tools (23) has a shaft that removably engages into one of said transmission units, and wherein the control motor (27) is an electrical or hydraulic motor carried by said case or placed away from that and actuating the transmission units through the speed reduction unit in the case (24).

12. Multi-tool device according to claim 11, wherein the control motor (27), when carried by said case (24), is fed, starting from an energy source, through means extending in the grip rod (35).

13. Multi-tool device according to the previous claims, wherein said grip tool (35) consists of one or more tubular segments connectable to one another and to a supporting tube (29) connected to said case (24) through a joint coupling (61).

## Patentansprüche

1. Mehrzweckgerätevorrichtung für die Ernte von Oliven und Kaffeebohnen von den entsprechenden Bäumen; beinhaltet ein Maschinengehäuse (20) mit mindestens einer Getriebeeinheitsserie (43, 49, 50, 57), mindestens einer gepaarten Erntewerkzeugserie (23), wobei diese Werkzeuge durch die Getriebeeinheiten in Betrieb gesetzt werden, durch runde Löcher auf einer Seite des geschilderten Maschinengehäuses hervorragen und die oben genannten Erntewerkzeuge von der ersten Biegung der Maschine bis zum freien Endstück zusammengebogen sind; eine Umhüllung (24), die an der gegenüberliegenden Seite des oben genannten Maschinengehäuses angeschlossen ist und eine Geschwindigkeitsreduktionseinheit beinhaltet; einen Anschluss (61) zur Stangenbefestigung (35), um die Einrichtung zu befestigen und in Betrieb zu setzen; einen Motor (27) zur Kontrolle der Getriebeeinheiten, durch die die Erntewerkzeuge mittels eines zentralen Ziehschafts (57) in Betrieb gesetzt werden, **dadurch gekennzeichnet, dass** die Seite des Maschinengehäuses (20), aus der die Emtewerkzeuge (23) herausragen, flach ist und die erste Biegung jedes Erntewerkzeuges sich zumindest teilweise ganz nahe an der genannten Seite des o.g. Maschinengehäuses befindet und im bezüglichen Loch gedreht wird.

2. Mehrzweckgerätevorrichtung, wie unter Anspruch 1 beschrieben, bei der das Maschinengehäuse aus zwei zusätzlichen übereinanderliegenden Umhüllungen (21, 22) besteht, mit Löchern auf der Maschinenseite, aus denen die Emtewerkzeuge herausragen.

3. Mehrzweckgerätevorrichtung, wie unter Anspruch 1 beschrieben, bei der das Maschinengehäuse (20) aus zwei zusätzlichen übereinanderliegenden Umhüllungen (21.22) besteht, mit einer flachen Umhüllungsseite des Maschinengehäuses, aus der die Emtewerkzeuge herausragen und wo sich bewegliche, entfernbare Schutzabstandsvorrichtungen (54) befinden, die sich aus entgegengesetzten Richtungen der Erntewerkzeuge bewegen und wenigstens für einen Teil der ersten Biegung jedes Erntewerkzeuges eine Höhenschranke bilden.

4. Mehrzweckgerätevorrichtung, wie unter Anspruch 3 beschrieben, bei der die Schutzabstandsvorrichtung (54) aus einem flachen oder leeren Metall- oder Plastikteil besteht, mit einer Oberfläche des Frontalendstückes ohne bewegliche Werkzeuge, die flach ist und abgeschrägte oder abgerundete Ecken hat.

5. Mehrzweckgerätevorrichtung, wie unter den Ansprüchen 3 und 4 beschrieben, bei der die Schutzabstandsvorrichtungen (54) auf den gegenüberliegenden Seiten der Erntewerkzeuge gleich hoch oder verschieden hoch sind; kann aus nur einem Maschinengehäuse bestehen.

6. Mehrzweckgerätevorrichtung, wie unter den vorhergehenden Ansprüchen beschrieben, bei der jedes Erntewerkzeug an seiner freien Endseite in eine halboffene Öffnung endet, die schräg zur Längshauptachse der Vorrichtung steht.

7. Mehrzweckgerätevorrichtung, wie unter den vorhergehenden Ansprüchen beschrieben, bei der die Erntewerkzeuge (23) vom Motor mittels der Getriebeeinheiten in Gang gesetzt werden, der nur in eine Richtung dreht.

8. Mehrzweckgerätevorrichtung, wie unter den Ansprüchen 1 und 2 beschrieben, bei der die Erntewerkzeuge (23) durch den Motor mittels der Getriebeeinheiten in Gang gesetzt werden und mit einer alternierenden Rundbewegung von mindestens 180° drehen.

9. Mehrzweckgerätevorrichtung, wie unter den Ansprüchen 1 und 2 beschrieben, bei der das Erntewerkzeug (23) mindestens eine kleine feste oder flexible Metall- oder Plastikstange besitzt, entweder mit rundem oder elliptischem Querschnitt, oder hohl oder flach.

10. Mehrzweckgerätevorrichtung, wie unter Anspruch 5 beschrieben, bei der jedes Erntewerkzeug (23) mehrere aufeinanderfolgende Stangen, die untereinander verbunden sind, besitzt.

11. Mehrzweckgerätevorrichtung, wie unter einem beliebigen vorhergehenden Anspruch beschrieben, bei der die genannten Getriebeeinheiten mindestens auf einer Seite des Maschinengehäuses in einer Reihe aufgestellt sind und jedes Erntewerkzeug (23) eine abmontierbare Welle aufweist, die in eine Getriebeeinheit eingekuppelt werden kann, wobei der Kontroll-Motor (27) ein elektrischer oder hydraulischer Motor ist, der sich innerhalb oder außerhalb der Umhüllung befindet, der die Getriebeeinheiten mittels der Geschwindigkeitsreduktionseinheit in der Umhüllung (24) in Gang setzt.

12. Mehrzweckgerätevorrichtung, wie unter Anspruch 11 beschrieben, bei der sich der Kontroll-Motor (27) in der Umhüllung (24) befindet und von einer Energiequelle ausgehend durch eine Rückhaltungsstange (35) versorgt wird.

13. Mehrzweckgerätevorrichtung, wie unter den vorhergehenden Ansprüchen beschrieben, bei der die oben genannte Rückhaltungsstange (35) ein oder mehrere Rohrteile besitzt, die sowohl untereinander als auch mit einem Halterohr (29) verbunden werden können, das seinerseits mittels einer Kupplungseinrichtung (61) mit der Umhüllung (24) verbunden ist.

## Revendications

1. Appareil à outils multiples pour la récolte de drupes d'olives et de café sur les plantes correspondantes, comprenant un corps (20) qui contient au moins une série d'unités de transmission (43, 49, 50, 57), au moins un rang d'outils de récolte (23), qui sont couplés aux, et actionnés par les unités de transmission et qui émergent d'un côté dudit corps à travers des ouvertures circulaires, lesdits outils de récolte étant ondulés en partant d'une première ondulation près dudit corps, jusqu'à une extrémité libre, un carter (24) relié à un côté opposé dudit corps et qui contient une unité de réduction de vitesse, un moyen d'accouplement (61) pour la fixation d'une barre (35) pour serrer et commander le dispositif, un moteur (27) pour commander lesdites unités de transmission pour actionner les outils de récolte (23) au moyen d'un arbre de transmission central, **caractérisé en ce que** le côté du corps (20) dont émergent les outils de récolte (23) est plat, et **en ce que** la première ondulation de chaque outil de récolte est rigoureusement attenante audit côté dudit corps, contenue au moins en partie en tournant dans une ouverture circulaire respective.

2. Appareil à outils multiples suivant la revendication 1, dans lequel ledit corps est composé de deux boîtiers complémentaires superposés (21, 22), et lesdites ouvertures circulaires sont prévues dans le côté d'un boîtier dudit corps dont émergent les outils de récolte..

3. Appareil à outils multiples suivant la revendication 1, dans lequel ledit corps (20) est composé de deux boîtiers complémentaires superposés (21, 22), et en ce que sur le côté plat du boîtier du corps, dont émergent les outils de récolte, se trouvent des protections d'écartement amovibles (54) qui s'étendent à partir de côtés opposés des outils de récolte, et forment une barrière au niveau d'au moins une partie de la première ondulation de chaque outil de récolte.

4. Appareil à outils multiples suivant la revendication 3, dans lequel les protections d'écartement (54) présentent une section plate ou creuse, en métal ou en matière plastique, et leur surface face à ladite l'extrémité libre des outils de secouage est plate, avec des angles émoussés ou arrondis.

5. Appareil à outils multiples suivant les revendications 3 et 4, dans lequel les protections d'écartement (54) ont une hauteur égale ou différente sur les côtés opposés des outils de récolte, et peuvent consister en une seule pièce.

6. Appareil à outils multiples suivant les revendications précédentes, dans lequel chaque outil de récolte se termine à son extrémité libre en un point semi-ouvert qui est incliné par rapport à l'axe longitudinal général du dispositif.

7. Appareil à outils multiples suivant les revendications précédentes, dans lequel les outils de récolte (23) sont actionnés par le moteur par l'intermédiaire desdites unités de transmission, pour tourner dans une seule direction.

8. Appareil à outils multiples suivant les revendications 1 et 2, dans lequel les outils de récolte (23) sont actionnés par le moteur à travers lesdites unités de transmission pour tourner suivant un mouvement de rotation alterné, sur un angle d'au moins 180°.

9. Appareil à outils multiples suivant les revendications 1 et 2, dans lequel chaque outil de récolte (23) est constitué par au moins une petite tige rigide ou flexible, de métal ou de matière plastique, ayant une section ronde ou elliptique, plate ou creuse.

10. Appareil à outils multiples suivant la revendication 5, dans lequel chaque outil de récolte (23) est constitué par plusieurs barres consécutives, jointes l'une à l'autre.

11. Appareil à outils multiples suivant les revendications précédentes, dans lequel lesdites unités de transmission sont alignées sur au moins un rang dudit corps, et chacun des outils de récolte (23) a un arbre qui coopère de manière amovible avec l'une des unités de transmission, et dans lequel le moteur de commande (27) est un moteur électrique ou hydraulique inclus dans ledit carter, ou extérieur à celui-ci, et actionnant les unités de transmission par l'intermédiaire de l'unité de réduction de la vitesse dans ledit carter (24).

12. Appareil à outils multiples suivant la revendication 11, dans lequel le moteur de commande (27), quand il est inséré dans ledit carter (24), est alimenté à partir d'une source d'énergie, par des moyens s'étendant dans la barre de prise (35).

13. Appareil à outils multiples suivant les revendications précédentes, dans lequel la barre de prise (35) est constituée par un ou plusieurs segments tubulaires raccordables l'un à l'autre et à un tube de support (29) relié au carter (24) par un dispositif d'accouplement (61).
